# EUROPEAN PATENT APPLICATION

(11) **EP 3 447 824 A1**
(43) Date of publication of application: **27.02.2019**
(21) Application number: 17203411.8
(22) Date of filing: 23.11.2017
(51) Int. Cl.: H01M 2/26, B23K 26/16, H01M 10/04

(54) **INTEGRATION WRAPPER CAPABLE OF LASER NOTCHING**

(30) Priority: 21.08.2017 KR 20170105249
(71) Applicant: Koem Co., Ltd., Pyeongtaek-si, Gyeonggi-do (KR)
(72) Inventor: Lee, Kye-seol, Seoul (KR)
(74) Representative: Beetz & Partner mbB

(57) **Abstract**

Disclosed herein is an integration wrapper capable of laser notching, including a spool unit (1) including an unwinding part on which materials of a roll form are capable of being installed, a transferring apparatus for moving electrodes in a specific length, and a tension apparatus capable of applying a tension, a plurality of laser notching units (2) disposed in a positive electrode and a negative electrode and driven to perform notching on the electrodes according to specific specifications of a tab form and interval when the electrodes are transferred by the transferring apparatus, and a wrapping unit (3) adapted to wind the notched materials located in a buffer unit and transferred by the transferring apparatus in a battery form by winding.

## Description

### CROSS REFERENCE TO RELATED APPLICATION

The present application claims the benefit of Korean Patent Application No. 10-2017-0105249 filed in the Korean Intellectual Property Office on August 21, 2017, the entire contents of which are incorporated herein by reference.

### BACKGROUND OF THE INVENTION

### 1. Technical Field

The present invention relates to an integration wrapper capable of laser notching and, more particularly, to an integration wrapper, which can facilitate a tab arrangement by integrating notching with a wrapper using a laser and performing the notching compared to a conventional technology in which a mold or a laser notching task and a wrapping task are separately performed and can improve the arrangement and conformity of the taps through real-time correction.

### 2. Description of the Related Art

Recently, a secondary cell capable of being charged and discharged is widely used as the energy source or auxiliary power device of a wireless mobile device.

Furthermore, the secondary cell has been in the spotlight as a power source for an electric vehicle (EV), a hybrid electric vehicle (HEV) and a plug-in HEV, which is proposed as a scheme for solving air pollution in an existing gasoline vehicle and diesel vehicle using fossil fuel.

The secondary cell is fabricated in a form in which an electrode assembly, together with an electrolyte, is embedded in a cell casing. The electrode assembly is divided into a stack type, a folding type and a stack-folding type depending on a manufacturing method.

In the case of the stack type or stack-folding type electrode assembly, the unit assembly has a structure in which a positive electrode and a negative electrode are sequentially stacked with an separation film interposed therebetween.

In order to fabricate the electrode assembly, it is necessary to first fabricate the positive electrode and the negative electrode in which electrode taps have been formed.

That is, in order to fabricate a unit electrode in which an electrode tab has been formed, first, there is a need for a notching process for forming the electrode tab in a continuous electrode sheet on one surface or both surfaces of which an electrode-active material has been coated.

In general, the notching process includes a process of locating the electrode sheet on a die and blanking part of the electrode sheet using a press.

In this case, the electrode sheet is transferred by a roller driven in synchronization with the operation of the press and sequentially blanked to form electrode taps.

Regarding a technology chiefly used in China or Korea, a notching apparatus for mounting electrode materials on a mold notching machine or a laser notching machine, performing a notching task and then winding the notched taps in a roll form is chiefly used.

Furthermore, another method is to insert materials of a roll form in which taps have been notched into a wrapper and wrapping the materials according to specific specifications using the wrapper.

In the methods, the notching process and the wrapping process are separately performed.

If the process is divided in a separation form as described above, there is a problem in that the location of the wrapper tab is twisted if the notched materials have an erroneous pitch or interval. As a result, there is a problem the entire lot itself of a corresponding electrode roll must be discarded.

Furthermore, there is inconvenience in terms of a process in which a loss of the separation form can be reduced when a specific electrode thickness is maintained and materials are managed.

### SUMMARY OF THE INVENTION

The present invention has been made keeping in mind the above problems occurring in the prior art, and an object of the present invention is to provide an integration wrapper capable of laser notching, which can solve a problem in that the entire lot of a corresponding electrode roll must be discarded because notching and wrapping are integrally performed in one apparatus without being separately performed, the existing notched materials have an inaccurate pitch or interval and thus the location of a wrapper tab is twisted.

In order to accomplish the above object, an integration wrapper according to an embodiment of the present invention includes a spool unit including an unwinding part on which materials of a roll form are capable of being installed, a transferring apparatus for moving electrodes in a specific length, and a tension apparatus capable of applying a tension, a plurality of laser notching units disposed in a positive electrode and a negative electrode and driven to perform notching on the electrodes according to specific specifications of a tab form and interval when the electrodes are transferred by the transferring apparatus, and a wrapping unit adapted to wind the notched materials located in a buffer unit and transferred by the transferring apparatus in a battery form by winding.

### BRIEF DESCRIPTION OF THE DRAWINGS

FIG. 1 is a general block diagram of an integration wrapper capable of laser notching according to an embodiment of the present invention.
FIG. 2 is a detailed configuration of a laser notching unit according to an embodiment of the present invention.

### <Description of reference numerals>

| | |
|---|---|
| 1: spool unit | 2: laser notching unit |
| 3: wrapping unit | 4: fan filter unit |
| 6: laser head | 7: air cutter |
| 11: laser scrap box | 12: laser dump |
| 16: leakage sensor | 17: dust suction unit |

### DETAILED DESCRIPTION

Embodiments of the present invention are described in detail below with reference to the accompanying drawings.

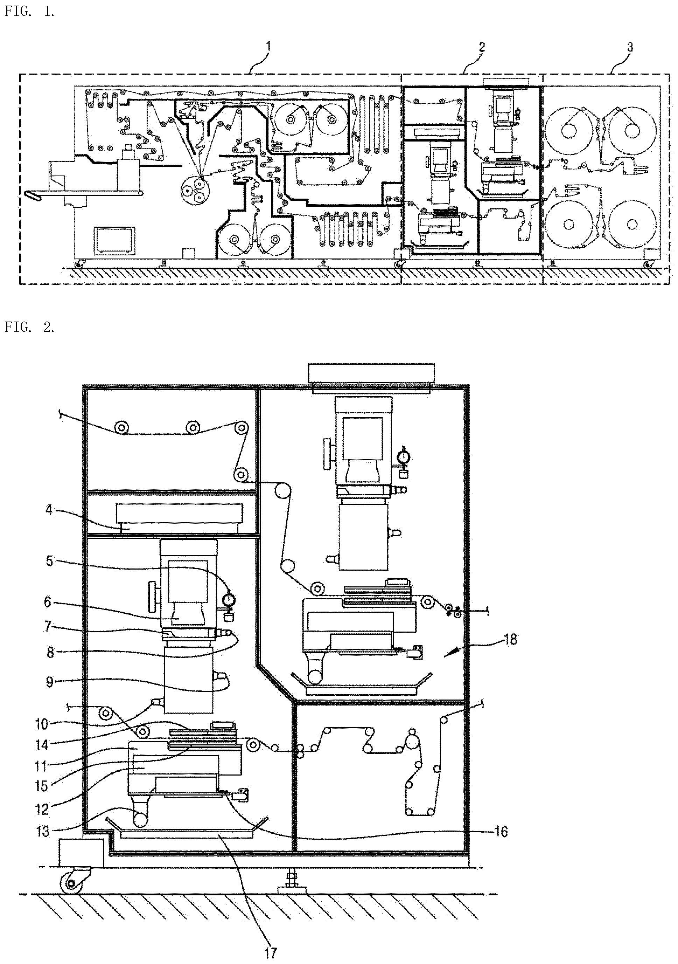

FIG. 1 is a general block diagram of an integration wrapper capable of laser notching according to an embodiment of the present invention. The integration wrapper includes a spool unit 1 including an unwinding part on which materials of a roll form may be installed, a transferring apparatus for moving electrodes in a specific length, and a tension apparatus capable of applying a tension, laser notching units 2 disposed in a positive electrode and a negative electrode and driven to perform notching on the electrodes according to specific specifications of a tab form and interval when the electrodes are transferred by the transferring apparatus, and a wrapping unit 3 adapted to wind he notched materials located in a buffer unit and transferred by the transferring apparatus in a battery form by winding.

FIG. 2 is a detailed configuration of the laser notching unit 2 according to an embodiment of the present invention. FIG. 2 shows the laser notching unit 2 for notching electrodes transferred in two stages using a laser.

The laser notching unit is described in detail below. A fan filter unit 4 is provided at the top of the laser notching unit 2. A laser head 6 for generating a laser is provided under the fan filter unit.

Furthermore, an air cutter 7 is provided under the laser head 6. A third fume suction pipe 8, a second fume suction pipe 9 and a first fume suction pipe 10 are sequentially provided under the air cutter 7.

Furthermore, a laser scrap box 11, a laser dump 12 and a laser scrap pipe 13 for collecting scraps generated when an electrode is cut by a laser are provided under the first fume suction pipe 10. Laser air plates 14 and 15 are provided at the top and bottom to which the electrode is transferred.

Furthermore, a leakage sensor 16 for detecting a leakage is provided. A dust suction unit 17 for sucking dust is provided at the bottom of the laser notching unit. Reference numeral 5 is a gauge, and reference numeral 18 is a buffer unit provided between the laser notching unit 2 and the wrapping unit 3.

In this case, a plurality of the laser notching units 2 has been illustrated, but they have the same structure. Accordingly, the reference numerals are assigned to only one laser notching unit and a description of the remaining laser notching units is omitted.

An operation of the integration wrapper configured as described above according to an embodiment of the present invention is described below.

First, the present invention improves the conventional tasks of performing notching and wrapping separately, and integrally forms laser notching and wrapping into one mechanism so that the laser notching and the wrapping can be performed at the same time.

The integration wrapper of the present invention includes the spool unit 1, including a tension device capable of transferring electrodes released through unwinding means by a specific length by the driving of a transferring driving motor and of applying tension in the state in which the unwinding means on which materials of a roll form can be disposed and which can release electrodes from a roller on which the electrodes have been wound and can supply the released electrodes.

Furthermore, the laser notching unit 2 is disposed in a positive electrode and a negative electrode. When the electrodes are transferred by the transferring apparatus, the laser notching unit operates to perform notching on the electrodes that are transferred according to specific specifications of a required tab form and interval.

That is, a notching task by a laser is performed on the transferred electrodes. The laser air plates 14 and 15 are provided at the top and bottom to which the electrodes are transferred, and thus perform an up or down operation.

In this case, the laser notching is performed to notch the non-fat part (non-coating part) of the electrode in a required form by a transfer roller that transfers the electrode at a specific speed. Scraps and fumes generated upon performing the notching are sucked by the first to third fume suction pipes 10, 9 and 8, and other dust is strongly discharged by the dust suction unit 17 provided at the bottom.

Furthermore, scarps generated upon performing the laser notching are discharged through the laser scrap box 11, the laser dump 12 and the laser scrap pipe 13.

The electrodes notched by the laser notching unit 2 are transferred to the wrapping unit 3 via the buffer unit 18.

Furthermore, when the laser notching is performed, the electrodes form a unit in one pattern and are transmitted to the buffer unit. In a next step, the positive electrode packed in the buffer unit is cut and the cut electrodes are widened at a specific interval. Tapes are attached to both surfaces of the widened positive electrodes through a positive electrode connection tape in a set length.

Furthermore, the electrodes are transmitted to the buffer unit. Materials secondarily transmitted to the buffer unit are transferred and wrapped into a sheet of a positive electrode, a sheet of a negative electrode, and two sheets of separators according to given specifications.

A finishing tape is attached to a device wrapped by the wrapping unit 3, and the device is transferred to a next process through a discharge process.

In this case, the wrapping unit 3 performs a typical wrapping process.

Accordingly, an electrode roll form of the present invention is completed by sequentially performing unwinding -- > laser notching --> buffering ---> wrapping ---> finishing tape --> discharge process. Accordingly, a problem in that a wrapper tab location is twisted and thus notched materials have an inaccurate pitch or interval can be prevented because laser notching and wrapping are integrally performed in one apparatus.

As described above, the present invention has advantages in that it can reduce a loss of materials because the notching machine and the wrapper are integrally fabricated by solving the disadvantage of the separation type in which the notching machine and the wrapper are separately used, it can reduce a loss of materials when wrapping is performed because a tab arrangement is smoothly performed by taking into consideration several variables in which the location of an electrode tab is twisted upon performing the wrapping, and it can compete a battery of high quality because a deviation for materials can be corrected.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

In this specification, a description of a method or a method step shall be understood also as a description of means for implementing the respective method or step thereof, and vice versa. Features shall be deemed combinable with each other also if their combination is not expressly mentioned, to the extent that the combination is technically feasible. Features described in a certain combination, context, embodiment, claim or figure shall be understood also as separable from said combination, context, embodiment, claim or figure and shall be understood as being usable also in another combination, context, embodiment, claim or figure, to the extent that this is technically feasible.

## Claims

1. An integration wrapper capable of laser notching, comprising:
a spool unit (1) comprising an unwinding part on which materials of a roll form are capable of being installed, a transferring apparatus for moving electrodes in a specific length, and a tension apparatus capable of applying a tension;
a plurality of laser notching units (2) disposed in a positive electrode and a negative electrode and driven to perform notching on the electrodes according to specific specifications of a tab form and interval when the electrodes are transferred by the transferring apparatus; and
a wrapping unit (3) adapted to wind the notched materials located in a buffer unit and transferred by the transferring apparatus in a battery form by winding.

2. The integration wrapper of claim 1, wherein the laser notching unit (2) is integrated with the wrapping unit (3) to facilitate a tab arrangement and to enable real-time correction.

3. The integration wrapper of claim 1, wherein:
a fan filter unit (4) is provided at a top of the laser notching unit (2),
a laser head (6) and an air cutter (7) for generating a laser are provided under the fan filter unit (4),
a third fume suction pipe (8), a second fume suction pipe (9) and a first fume suction pipe (10) are sequentially provided under the air cutter (7),
a laser scrap box (11), a laser dump (12) and a laser scrap pipe (13) for collecting scraps generated when the electrodes are cut by a laser are provided under the first fume suction pipe (10), and
laser air plates (14)(15) are provided at a top and bottom to which the electrodes are transferred, respectively.
